**Europäisches Patentamt**

**European Patent Office**

**Office européen des brevets**

(11) Numéro de publication : **0 511 047 B1**

(12) **FASCICULE DE BREVET EUROPEEN**

(45) Date de publication du fascicule du brevet :
**19.07.95 Bulletin 95/29**

(51) Int. Cl.⁶ : **G01B 11/04**

(21) Numéro de dépôt : **92401023.4**

(22) Date de dépôt : **10.04.92**

(54) **Procédé de mesures dimensionnelles d'objets en mouvement.**

(30) Priorité : **18.04.91 FR 9104775**

(43) Date de publication de la demande :
**28.10.92 Bulletin 92/44**

(45) Mention de la délivrance du brevet :
**19.07.95 Bulletin 95/29**

(84) Etats contractants désignés :
**AT BE CH DE DK ES FR GB IT LI LU NL SE**

(56) Documents cités :
**EP-A- 0 029 748**
**US-A- 4 942 539**

(73) Titulaire : **ISOVER SAINT-GOBAIN**
**18, avenue d'Alsace**
**F-92400 Courbevoie (FR)**

(72) Inventeur : **Louis, Bernard**
**5 Rue Fontaine Saint Maur,**
**Louveaucourt Bailleval**
**F-60140 Liancourt (FR)**
Inventeur : **Bichot, Bernard**
**Rue Henri Ayrald-Ronquerolles**
**F-60600 Clermont (FR)**

(74) Mandataire : **Muller, René et al**
**SAINT-GOBAIN RECHERCHE**
**39, quai Lucien Lefranc-BP 135**
**F-93303 Aubervilliers Cédex (FR)**

## Description

L'invention a trait aux techniques de mesure des dimensions, et éventuellement de la vitesse, d'objets en mouvement, notamment des objets parallélépipédiques défilant sur un convoyeur d'une ligne de fabrication.

En effet, d'une manière générale, l'industrie pousse de plus en plus loin l'automatisation des étapes de fabrication des produits de grande série. Cette automatisation, qui permet d'atteindre des cadences de fabrication très soutenues, nécessite du même coup de mettre en place un contrôle de plus en plus précis, notamment un contrôle dimensionnel, des objets en cours de fabrication, en vue aussi bien d'en décider l'acceptation ou le rejet que d'en surveiller la progression sur la ligne.

Cette exigence de contrôle se retrouve pleinement dans le cas de la fabrication des panneaux isolants, obtenus à partir de laine minérale. En effet, après la production de la matière même dont est constitué le panneau final, ladite matière passe sous forme de couche continue défilant sur un convoyeur, afin d'y subir différents traitements, dont toute une série de coupes aussi bien longitudinales que transversales par rapport à son axe de défilement, pour que l'on obtienne des panneaux finals de forme habituellement parallélépipédique, aux dimensions souhaitées. En général, l'ordre de grandeur des dimensions est pour la longueur finale compris entre 1 et 4 mètres, pour l'épaisseur finale entre 1 et 40 cm après compression et pour la largeur finale de 0,3 à 2,5 mètres.

Voir, par exemple, US-A-49 42 539.

Jusque-là, dans ce domaine, les mesures dimensionnelles étaient effectuées manuellement, en bout de ligne et d'une manière discontinue.

Or, il s'avère utile de pouvoir contrôler les dimensions, et même la vitesse, à un ou plusieurs stades de découpe. Tout d'abord cela garantirait une qualité constante aux produits finals en détectant ceux qui sortent des normes, et en conservant "l'historique" de fabrication de chacun des produits pour un contrôle a postériori. En plus, cela permettrait d'envisager, à partir de ces données, une régulation de la production comme par exemple un asservissement d'une opération de découpe.

Il faut donc des mesures en continu, sans contact afin de ne pas perturber la géométrie de l'objet mesuré, et dont les résultats soient connus en temps réel et également stockables afin de pouvoir les traiter.

Un dispositif de contrôle optique désormais largement utilisé est la caméra linéaire, appelée caméra CCD, (Charge Coupled Device) comportant notamment un objectif et un capteur muni d'une barrette d'éléments photosensibles juxtaposés : des pixels, chaque pixel recevant une quantité d'énergie lumineuse qu'il convertit en charge électrique directement proportionnelle à l'intensité lumineuse reçue et au temps d'exposition. On obtient la mesure voulue à une fréquence image donnée en fonction du nombre de pixels "impressionnés" et de la distance séparant la caméra de l'objet, sous forme analogique, que l'on peut numériser en vue d'un traitement informatique.

Or, les panneaux isolants précédemment évoqués, avant ou après n'importe laquelle des opérations de découpe, défilent sur le convoyeur avec une trajectoire habituellement constituée d'au moins un segment rectiligne, trajectoire bien définie par le convoyeur lui-même. Mais ces panneaux n'ont pas de position prédéterminée absolument fixe par rapport audit convoyeur, dans la mesure où ils peuvent être centrés de manière différente sur celui-ci et où ils peuvent avoir différents formats. Ces panneaux n'ont donc pas a fortiori de position prédéterminée par rapport à tout dispositif de détection fixe installé à proximité. On ne peut donc utiliser une caméra CCD telle quelle, car celle-ci, pour évaluer une dimension d'un objet, doit pouvoir se référencer exactement par rapport à lui.

Le but de l'invention est donc de concevoir un procédé de mesure utilisant ce type de dispositif de détection optique et permettant de déterminer en continu les dimensions (longueur, largeur, épaisseur) et éventuellement la vitesse d'objets parallélépipédiques en mouvement de manière à répondre aux objectifs précédemment évoqués, alors qu'au départ on ne connaît ni la position exacte par rapport au(x) dispositif(s) de détection desdits parallélépipèdes, ni leurs dimensions avec la précision requise.

L'invention est un procédé optoélectronique de contrôle dimensionnel en continu d'un prisme à section parallélogramme sur un convoyeur défilant à une certaine vitesse selon un axe (OX) parallèle à l'axe dudit prisme, et comportant les étapes suivantes :

a) on vise deux faces non parallèles dudit prisme selon des directions (OY, OZ) perpendiculaires à chacune d'entre elles, et on obtient à un instant donné les deux mesures angulaires ($\alpha$, $\beta$) relatives aux positions des trois arêtes délimitant ces deux faces,

b) on estime la position de l'arête commune à ces deux faces par rapport à l'une ou l'autre desdites directions (OY, OZ),

c) on détermine la position exacte de l'arête commune selon les deux directions (OY, OZ) par des itérations à partir des deux mesures angulaires ($\alpha$, $\beta$) et de l'estimation précédentes, les itérations s'arrêtant lorsque la différence des deux approximations successives sur ladite position selon chacune des directions (OY,

2

OZ) est inférieure à la précision imposée.

Avantageusement, on détermine après découpe transversale dudit prisme la troisième dimension du parallélépipède ainsi constitué à partir d'une mesure angulaire supplémentaire et de la détermination de la position exacte de l'arête commune.

De préférence, on détermine les mesures angulaires par des caméras linéaires CCD, et ledit parallélépipède est un parallélépipède rectangle.

Le procédé est tel que l'on dispose deux caméras CCD aux plans de visée confondus et perpendiculaires à l'axe (OX) du convoyeur pour mesurer respectivement l'épaisseur et la largeur du prisme et une troisième caméra CCD au plan de visée parallèle à l'axe (OX) du convoyeur pour mesurer la longueur du parallélépipède et éventuellement sa vitesse.

On effectue les opérations de traitement des mesures angulaires par une unité de calcul à laquelle chacune des caméras est reliée.

L'ensemble des opérations précédentes se fait de préférence à une fréquence de 100 Hertz.

Les valeurs obtenues pour chacune des dimensions sont traitées statistiquement en temps réel entre deux séries de mesures angulaires, les valeurs aberrantes étant éliminées.

Le traitement statistique est effectué à une fréquence de 1 Hertz.

De préférence, lors de l'étape c), les itérations se font sur les coordonnées du point A appartenant à l'arête commune aux deux faces du prisme, à partir de l'une de ses coordonnées $Y_0$ approximative et des mesures angulaires ($\alpha$, $\beta$) des caméras d'épaisseur et de largeur, de la manière suivante :

- l'étape d'initialisation des itérations s'effectue avec le point $A_n$ de coordonnées

$$\begin{cases} Y_n \\ Z_n = f\ (Y_n,\ \alpha\ ) \end{cases}$$

pour n = O

- chaque itération s'effectue ensuite en incrémentant d'une unité l'indice n, par le calcul des coordonnées de

$$A_n\ :\ \begin{cases} Y_n & = g\ (Z_{n-1},\ \beta) \\ Z_n & = Z_{n-1} \end{cases}$$

puis de :

$$A_{n+1}\ :\begin{cases} Y_{n+1} = Y_n \\ Z_{n+1} = f\ (Y_n,\ \alpha\ ) \end{cases}$$

- puis l'on teste pour chaque calcul des coordonnées de $A_n$ et $A_{n+1}$ pour une valeur de n fixée, les différences en valeurs absolues :

$$|Y_n - Y_{n-1}|\ et\ |Z_{n+1} - Z_n|$$

par rapport à des bornes inférieures $\Delta Y$ min et $\Delta Z$ min imposées, les coordonnées $Y_A$ et $Z_A$ de A retenues étant les dernières ayant été calculées.

On choisit selon l'invention des valeurs de $\Delta Y$min et $\Delta Z$min afin que le rapport entre la borne inférieure $\Delta Y$min la concernant et la largeur moyenne à mesurer du prisme soit compris entre 0,5/1000 et 1/1000, et afin que le rapport entre la borne inférieure $\Delta Z$min la concernant et l'épaisseur moyenne à mesurer du prisme soit compris entre 0,5/1000 et 1/1000.

On peut appliquer ce procédé au cas où la vitesse du convoyeur est nulle.

L'invention sera maintenant explicitée par un exemple de réalisation se référant aux figures suivantes :

Fig. 1 : un schéma d'une ligne de fabrication de panneaux isolants indiquant le positionnement des caméras CCD utilisées dans la cadre de l'invention.

Fig. 2 : un schéma du dispositif de contrôle des dimensions du panneau en mouvement selon l'invention.

Fig. 3 : la projection du panneau dans un plan perpendiculaire à son axe de défilement.

Fig. 4 : la représentation graphique dans le même plan que la fig 3 des approximations successives sur le positionnement de l'arête du panneau.

Fig. 5 : l'organigramme très simplifié du procédé par itérations.

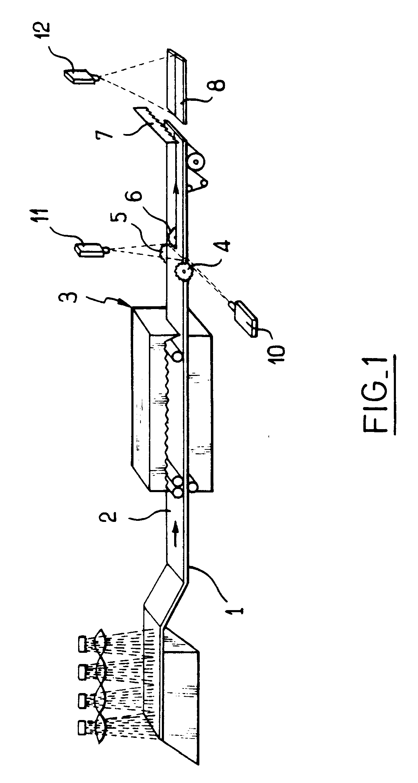

A la figure 1, est représenté de manière très simplifiée un exemple de ligne de fabrication de panneaux de laine de verre. On y voit la laine de verre imprégnée de liant projetée sur le convoyeur 1 et défilant en couche continue 2 sur celui-ci, ladite couche 2 passant tout d'abord dans une étuve 3 permettant de réticuler le liant. Puis la couche 2 subit des découpes longitudinales par rapport à son axe de défilement par des lames de scie circulaires 4, 5, 6 à la fois pour obtenir des bords bien nets et une largeur adéquate pour chaque panneau. Ensuite, elle est découpée transversalement par rapport à son axe de défilement en général par un massicot 7, de manière à obtenir finalement des panneaux 8 aux dimensions voulues.

La figure 1 indique de plus où, selon le mode de réalisation représenté, on positionne les dispositifs optiques permettant les mesures dimensionnelles : trois caméras CCD sont utilisés, deux 10, 11 situées en amont du massicot 7 et une, 12, située en aval de celui-ci. Les deux premières 10, 11 permettent de mesurer respectivement l'épaisseur et la largeur de la couche continue 2, lesdites mesures se faisant de préférence avant l'opération de découpe transversale par le massicot 7 pour éviter d'avoir à prendre en compte d'éventuelles modifications d'orientation entre la couche 2 et les panneaux 8, d'éventuels décentrages latéraux par rapport au convoyeur 1. La troisième caméra 12 mesure la longueur du panneau 8, c'est pourquoi il va de soi qu'elle doit être placée en aval du massicot 7.

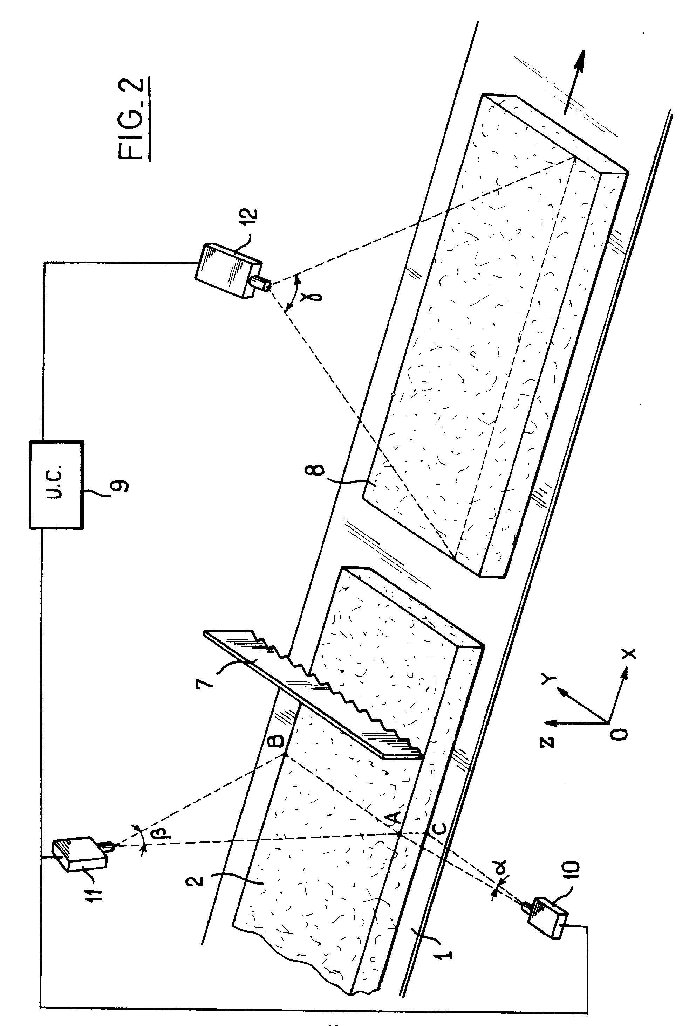

A la figure 2, on a représenté dans un espace référencé par le repère tridimensionnel cartésien (OXYZ), sans respecter les proportions de manière à rendre les choses plus claires, un panneau 8 circulant sur un tapis convoyeur 1, la surface de contact entre le panneau 8 et le tapis convoyeur 1 appartenant au plan (OXY). L'axe (OX) est l'axe de sa trajectoire rectiligne et l'axe (OY) est perpendiculaire à (OX).

Le procédé utilise comme on l'a évoqué précédemment trois caméras linéaires 10, 11, 12 CCD qui sont toutes reliées à une unité de calcul informatique 9 de traitement de données.

Une caméra mesure l'épaisseur, c'est la caméra 10 située au voisinage du tapis 1, de côté, de manière à pouvoir évaluer l'épaisseur sur la "tranche du produit". Le plan de visée de celle-ci, qui passe par la caméra et contient son axe optique, se trouve perpendiculaire à ladite "tranche" ainsi qu'à l'axe de défilement du panneau (OX).

Deux autres caméras 11, 12, situées au-dessus du plan (OXY) du convoyeur, permettent d'évaluer la largeur et la longueur de l'objet sur sa face supérieure.

Leurs deux plans de visée, définis de la même manière, sont respectivement perpendiculaires à l'axe (OX) et à l'axe (OY). Dans le cas représenté à la figure 1, les plans de visée de la caméra des épaisseurs 10 et des largeurs 11 sont confondus.

Comme on l'a évoqué précédemment, ces caméras comportent des barrettes de pixels. Ainsi, les caméras des largeurs 11 et longueurs 12 ont des champs optiques relativement larges, et comportent chacune une barrette de 2000 à 3500 pixels. La caméra des épaisseurs 10, de champ optique plus restreint car mesurant des dimensions beaucoup plus réduites, comporte une barrette d'environ 500 pixels. Lesdites barrettes enregistrent le nombre de pixels ayant reçu un certain niveau de flux lumineux.

Dans notre cas, en fait, nuancer les niveaux de gris est inutile. En effet, il se trouve qu'ici, les panneaux de laine de verre sont clairs par rapport à leur environnement plus sombre. Il suffit donc de pouvoir détecter un certain nombre de pixels "blancs" associés à la présence du panneau, et un certain nombre de pixels "noirs" quand la caméra ne "voit" que l'environnement.

Dans la pratique, chacune des caméras 10, 11, 12 délivre à une fréquence image de balayage donnée un signal analogique de tension en fonction du temps. Ces signaux sont alors traités de la manière suivante : on détermine pour chacun d'eux un seuil correspondant à un niveau de gris moyen. Autour de ce seuil, chaque signal analogique est binarisé en signal carré noir/blanc. Ce signal binaire est ensuite numérisé, de manière à obtenir finalement un certain nombre de pixels "noirs" et "blancs" permettant d'évaluer les dimensions recherchées.

Plus le contraste lumineux sera fort entre le panneau 8 et son environnement, plus l'identification de ce que l'on pourrait appeler le pixel "frontière", c'est-à-dire le premier pixel "blanc" qui va donner le contour de l'objet sera facilitée. C'est pourquoi on peut avantageusement prévoir de placer à proximité du convoyeur des projecteurs, non représentés dans la figure 2.

On peut en fait aisément relier les nombres de pixels "blancs" et "noirs", que chaque caméra 10, 11, 12 délivre à une fréquence de balayage donnée, après numérisation de son signal analogique, à des angles correspondants $\alpha$, $\beta$, $\gamma$ que l'on désigne ici commodément par le terme "angles d'interception" de l'objet, c'est-à-dire de son épaisseur sur sa "tranche", de sa largeur et de sa longueur sur sa face supérieure. Ce sont ces angles d'interception que l'on considérera ci-après comme mesures optiques délivrées par les caméras, mais il est clair que le procédé serait le même en raisonnant à partir des nombres de pixels.

Si l'on prend l'exemple de la caméra des épaisseurs 10, on associe ainsi le nombre de pixels "blancs" permettant d'évaluer l'épaisseur du panneau avec son angle d'"'"interception" correspondant $\alpha$. Et pour cette épaisseur donnée, cet angle $\alpha$ varie nécessairement en fonction du centrage latéral du panneau 8 par rapport au convoyeur 1, c'est-à-dire en fonction de la distance séparant la caméra 10 du segment AC du panneau, que l'on peut corréler avec le positionnement du point A situé sur l'arête du panneau parallèle à l'axe (OX).

On est confronté au même problème pour la mesure des largeur, longueur, puisque les angles $\beta$, $\gamma$ des caméras 11, 12, varient eux aussi en fonction de la distance les séparant de la face supérieure du panneau, c'est-à-dire en fonction de l'épaisseur de celui-ci, ce qu'on peut corréler en fait avec le positionnement dudit point A par rapport à l'axe (OZ) cette fois.

Il va de soi, en effet, que les trois caméras sont, tout comme le plan du convoyeur, fixes et parfaitement référencées par rapport au repère tridimensionnel (OXYZ).

Donc, en fait, les distances caméras/objet sont déterminables simplement à partir du positionnement du point A appartenant à l'arête de l'objet dans le repère bidimensionnel (OYZ), arête, qui, dans ce mode de réalisation, est parallèle à l'axe de défilement (OX).

Très avantageusement, on a donc, selon l'invention, ramené le problème de la détermination des distances caméras/panneau dans l'espace à un problème de positionnement d'un point unique dans un plan.

Une analyse purement géométrique du problème posé pourrait permettre d'arriver directement aux coordonnées $Y_A$ et $Z_A$ du point A, connaissant les pixels-frontières correspondant au point A. Il suffirait d'avoir stocké dans le mémoire de l'ordinateur, tous les couples de valeurs $Y_A$ et $Z_A$ correspondant aux couples de pixels-frontières possibles et calculés à partir de l'analyse géométrique des éléments de la figure 2 pour disposer directement des coordonnées cherchées. Cependant, le volume des informations à stocker serait énorme et le temps d'accès aux données relativement long. C'est pourquoi l'invention propose une méthode d'approximation plus simple et plus rapide.

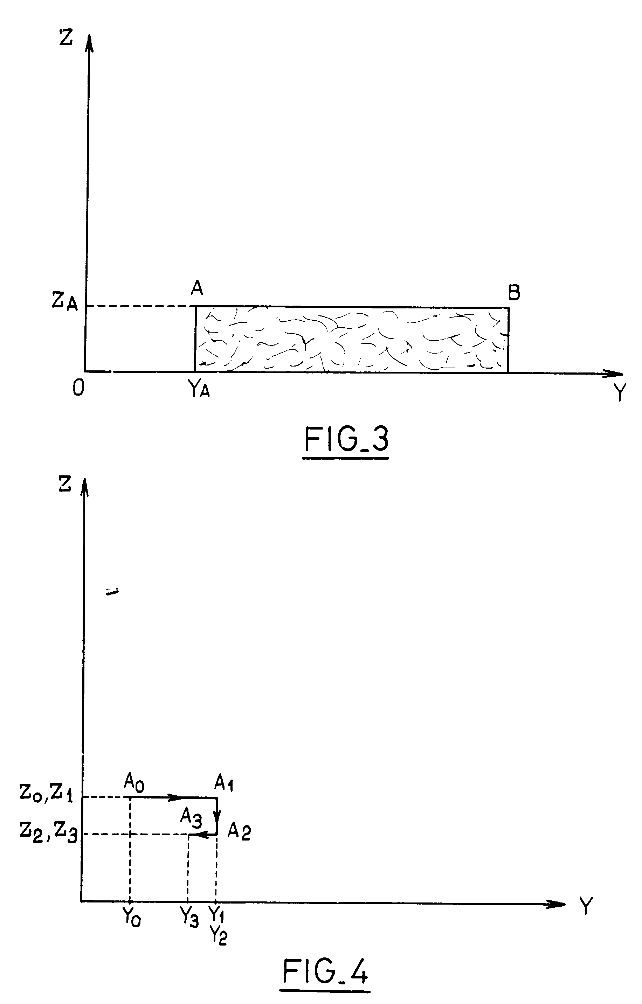

La figure 3 représente la projection du panneau 8 dans le plan (OYZ), avec le point A de coordonnées $Y_A$ et $Z_A$. Ce sont ces valeurs que l'invention va permettre de déterminer automatiquement avec exactitude.

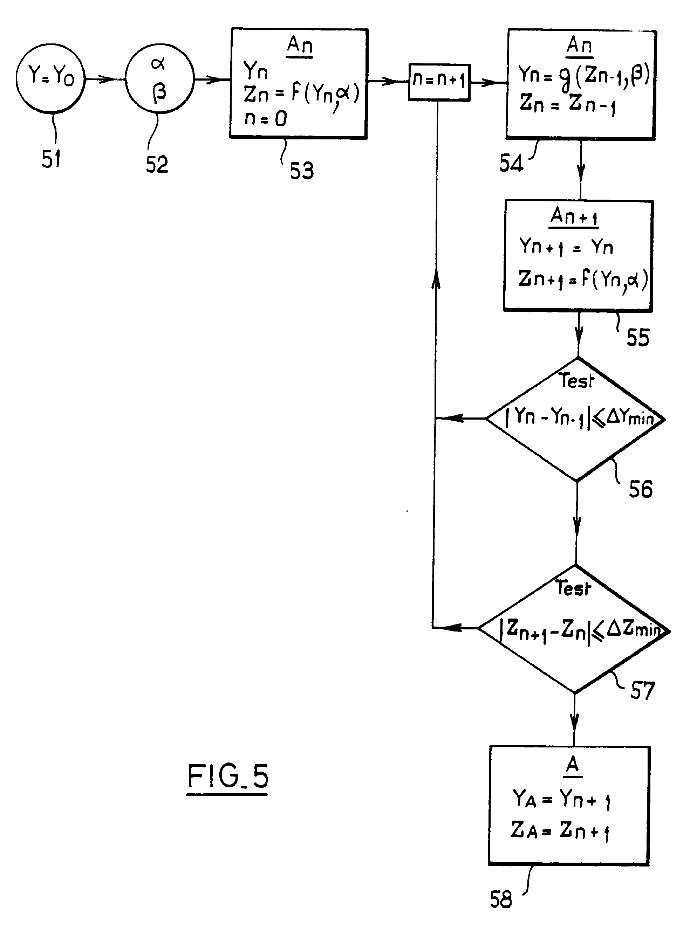

Les figures 4 et 5 explicitent comment on procède selon l'invention.

Tout d'abord, le premier stade 51 consiste à imposer une valeur hypothétique à l'une des coordonnées de A : c'est de préférence $Y_0$ par rapport à l'axe (OY). En effet, l'estimation d'$Y_0$ peut être considéré relativement proche de la réalité, car on connaît en général assez bien la position du bord du panneau 8 par rapport au bord du convoyeur 1 parallèle à celui-ci. Dans le cas d'un panneau fibreux, cette position est voisine de celle de la lame de scie circulaire 4 ou 5 qui a enlevé les bordures de la couche continue 2.

Le second stade peut être qualifié d'initialisation 52, 53 : à partir de l'angle $\alpha$ donné par la caméra des épaisseurs 10 et permettant d'évaluer une première épaisseur, et de $Y_0$, l'unité de calcul 9 permet d'obtenir la coordonnée $Z_0$ : on pourrait donc placer un premier point $A_0$ dans le plan (OYZ) comme cela est indiqué dans la figure 4.

Commencent ensuite les itérations. Pour obtenir un point plus précis $A_1$, on effectue la première itération sur sa coordonnée par rapport à l'axe (OY) :

Par l'intermédiaire de l'unité de calcul 9, la caméra des largeurs 11 a accès à cette valeur $Z_0$, qui, associée à l'angle $\beta$ d'interception de la largeur que la caméra mesure, permet de déterminer une largeur. Ceci revient à donner une valeur approximative de la coordonnée de A par rapport à Y, soit $Y_1$. On a ainsi obtenu le point $A_1$ ($Y_1$, $Z_1$) tel que

$$\begin{cases} Y_1 = g\ (Z_0,\ \beta) \\ Z_1 = Z_0. \end{cases}$$

La deuxième itération se fait alors sur la coordonnée de A par rapport à (OZ) : la caméra des épaisseurs 10, ayant accès à la nouvelle valeur $Y_1$ par l'unité de calcul 9, avec toujours son même angle d'interception $\alpha$ permet d'évaluer une nouvelle épaisseur. Ceci revient à donner une nouvelle valeur à $Z_A$. On obtient ainsi le point $A_2$ ($Y_2$, $Z_2$) tel que

$$\begin{cases} Y_2 = Y_1 \\ Z_2 = f\ (Y_1, \alpha). \end{cases}$$

Les itérations 54, 55 se poursuivent alors sur le même principe, c'est-à-dire qu'en incrémentant d'une unité à chaque fois l'indice n, on calcule à la suite $A_n$ tel que

$$\begin{cases} Y_n = g\ (Z_{n-1}, \beta) \\ Z_n = Z_{n-1} \end{cases}$$

$A_{n+1}$ tel que

$$\begin{cases} Y_{n+1} = Y_n \\ Z_{n+1} = f\ (Y_n, \alpha) \end{cases}$$

A chaque calcul de $A_n$ et $A_{n+1}$ pour une valeur de n donnée, on effectue deux tests 56, 57 successifs : on calcule la différence en valeur absolue entre les deux dernières coordonnées par rapport à l'axe (OY) et les deux dernières coordonnées par rapport à l'axe (OZ), soit
$$|Y_n - Y_{n-1}|\ \text{et}\ |Z_{n+1} - Z_n.|$$
Dès que l'une ou l'autre de ces différences est inférieure ou égale aux valeurs-consignes imposées $\Delta$Ymin et $\Delta$Zmin, qui correspondent à la précision avec laquelle on désire connaître les dimensions à mesurer, les itérations sont stoppées 58 et l'on retient comme coordonnées de A les dernières coordonnées calculées selon les axes (OY) et (OZ).

On a alors le point A tel que

$$\begin{cases} Y_A = Y_{n+1} \\ Z_A = Z_{n+1} \end{cases}$$

Les valeurs-consignes sont en général de l'ordre du millimètre. Ainsi, on impose habituellement :

$\Delta$Y min = 1 mm

$\Delta$Z min = 0,5 mm.

Généralement, il suffit de quelques itérations pour obtenir le résultat recherché. C'est donc une technique particulièrement avantageuse de détermination d'un point dans un plan, car très rapide. Obtenir ce résultat sans ces itérations nécessiterait, comme on l'a vu, une analyse combinatoire particulièrement lourde entre tous les pixels "noirs" et "blancs" de la caméra des épaisseurs 10 et tous ceux de la caméra des largeurs 11.

Une fois le point A ainsi référencé, on obtient directement l'épaisseur exacte par la connaissance de $\alpha$ et $Y_A$, et la largeur exacte par la connaissance de $\beta$ et $Z_A$.

On en déduit la longueur par la connaissance de $Z_A$ et la mesure optique $\gamma$ donnée par la caméra des longueurs 12.

Les trois dimensions sont déterminées par ce procédé à une fréquence de 100 Hertz. On moyenne ensuite toutes les valeurs ainsi recueillies pour chaque dimension à une fréquence de 1 Hertz, en éliminant les valeurs jugées aberrantes, c'est-à-dire ici s'écartant de plus de 2 fois la valeur de l'écart-type $\sigma$ par rapport à la valeur moyenne calculée au départ. Ces valeurs "aberrantes" sont dues pour la plupart à la nature même du panneau 8, de texture fibreuse : Il peut en effet arriver que des mèches dépassent un peu des panneaux et faussent alors les mesures.

Une nouvelle valeur moyenne est alors recalculée, elle constitue la mesure.

On obtient ainsi, en temps réel, en valeurs numériques, une fois par seconde les trois dimensions de l'objet, sachant que de surcroît la caméra des longueurs 12 est apte à mesurer la vitesse du bord avant du panneau.

On précise, en effet, que la mesure des vitesses se fait, si on le souhaite, en calculant le temps que met le bord avant du panneau entre son entrée dans le champ de la caméra et son arrivée à l'axe optique de ladite caméra.

Ce mode de réalisation n'est nullement limitatif de l'invention. Ainsi, on peut notamment envisager d'appliquer la technique itérative non pas sur la détermination "couplée" de la largeur et de l'épaisseur, mais sur celle de la longueur et de l'épaisseur. De plus, il est clair que l'invention ne se limite pas forcément à la détermination de dimensions de panneaux tels que représentés, c'est-à-dire des parallélépipèdes rectangles. Rien ne s'oppose, en effet, par exemple, à ce que les deux faces perpendiculaires à l'axe de défilement soient biseautées dans le cas d'une détermination couplée de la largeur et de l'épaisseur.

De plus, compte tenu que tout dispositif optique, n'étant pas idéal, fait des mesures entachées de petites distorsions optiques, et ceci plus particulièrement lorsque l'objet à mesurer est distant de l'axe optique du dispositif, l'unité de calcul 9 peut tenir compte de ces distorsions afin de rectifier automatiquement les valeurs mesurées, soit ici $\alpha$, $\beta$, et $\gamma$, tout le processus d'itérations se faisant alors sur les valeurs $\alpha'$, $\beta'$ et $\gamma'$ rectifiées.

Pour faciliter le contrôle des dimensions par un opérateur, il est pratique de concevoir également une alarme visuelle et/ou sonore l'avertissant qu'une des dimensions moyennées est en dehors des tolérances.

Avec cette technique déductive de mesure d'une mise en oeuvre particulièrement simple, on arrive ainsi à avoir de très bonnes précisions de l'ordre du millimètre, à la fois en temps réel et en données mémorisables, données qui permettront ensuite de déceler ultérieurement où et quand un éventuel problème a pu survenir.

Connaissant, bien sûr, les positions des caméras 10, 11, 12 et du convoyeur 1 qui, elles, sont fixes et référencées dans l'espace (OXYZ), on a ainsi un moyen de mesurer des panneaux 8 de manière complètement automatisée. Cela évite tout réglage manuel fastidieux des dispositifs de mesure en fonction du panneau fabriqué, puisque l'invention permet d'adapter la mesure à toute dimension et tout centrage des panneaux, sans contact perturbateur avec ceux-ci.

Ce système caméras-unité de calcul est de configuration souple : on peut placer les caméras par exemple au niveau de l'étape de coupe transversale par un massicot 7, la caméra des longueur/vitesse 12 pouvant avantageusement permettre de réguler la tombée de la lame coupante par asservissement, en étant juste placée en aval de celle-ci.

Si la caméra des largeurs 11 est placée en amont du massicot au niveau des organes de découpe longitudinale, elle peut être adaptée pour être capable de mesurer plusieurs largeurs simultanément, dans la mesure où les panneaux venant d'être coupés longitudinalement sont séparés par des écarteurs laissant des espaces suffisamment grands entre les panneaux pour que la caméra puisse les détecter, lesdits panneaux restant parallèles à l'axe de défilement (OX).

## Revendications

1. Procédé optoélectronique de contrôle dimensionnel en continu d'un prisme à section parallélogramme (2) sur un convoyeur (1) défilant à une certaine vitesse selon un axe (OX) parallèle à l'axe dudit prisme, et comportant les étapes suivantes :

   a) on vise deux faces non parallèles dudit prisme selon des directions (OY, OZ) perpendiculaires à chacune d'entre elles, et on obtient à un instant donné les deux mesures angulaires ($\alpha$, $\beta$) relatives aux positions des trois arêtes délimitant ces deux faces,

   b) on estime la position de l'arête commune à ces deux faces par rapport à l'une ou l'autre desdites directions (OY, OZ),

   c) on détermine la position exacte de l'arête commune selon les deux directions (OY, OZ) par des itérations à partir des deux mesures angulaires ($\alpha$, $\beta$) et de l'estimation précédentes, les itérations s'arrêtant lorsque la différence des deux approximations successives sur ladite position selon chacune des directions (OY, OZ) est inférieure à la précision imposée.

2. Procédé selon la revendication 1, **caractérisé en ce qu'** après découpe transversale dudit prisme (2), on détermine la troisième dimension du parallélépipède ainsi constitué (8) à partir d'une mesure angulaire supplémentaire ($\gamma$) et de la détermination de la position exacte de l'arête commune.

3. Procédé selon l'une des revendications 1 ou 2, **caractérisé en ce qu'** on détermine les mesures angulaires ($\alpha$, $\beta$, et éventuellement $\gamma$) par des caméras linéaires CCD (10, 11, et éventuellement 12).

4. Procédé selon l'une des revendications 2 ou 3, **caractérisé en ce que** le parallélépipède (8) est un parallélépipède rectangle.

5. Procédé selon la revendication 4, caractérisé en ce que on dispose deux caméras CCD (10, 11) aux plans de visée confondus et perpendiculaires à l'axe (OX) du convoyeur (1) pour mesurer respectivement l'épaisseur et la largeur du prisme (2) et une troisième caméra CCD (12) au plan de visée parallèle à l'axe (OX) du convoyeur (1) pour mesurer la longueur du parallélépipède (8) et éventuellement sa vitesse.

6. Procédé selon une des revendications 1 à 5, **caractérisé en ce qu'** on effectue les opérations de traitement des mesures angulaires ($\alpha$, $\beta$, et éventuellement $\gamma$) par une unité de calcul (9) à laquelle chacune des caméras (10, 11, et éventuellement 12) est reliée.

7. Procédé selon une des revendications 1 à 6, **caractérisé en ce que** l'ensemble des opérations précédentes se fait à une fréquence de 100 Hertz.

8. Procédé selon une des revendications 1 à 7, **caractérisé en ce que** les valeurs obtenues pour chacune des dimensions sont traitées statistiquement en temps réel entre deux séries de mesures angulaires, les valeurs aberrantes étant éliminées.

9. Procédé selon les revendications 7 et 8, **caractérisé en ce que** le traitement statistique est effectué à une fréquence de 1 Hertz.

10. Procédé selon l'une des revendications précédentes, **caractérisé en ce que** lors de l'étape c, les itérations se font sur les coordonnées du point A, appartenant à l'arête commune aux deux faces du prisme (2) à partir de l'une de ses coordonnées $Y_0$ approximative et des mesures angulaires $(\alpha, \beta)$ des caméras d'épaisseur (10) et de largeur (11), de la manière suivante :
- l'étape d'initialisation des itérations s'effectue avec le point $A_n$ de coordonnées

$$\begin{cases} Y_n \\ Z_n = f\ (Y_n, \alpha\ ) \end{cases}$$

pour n = O
- chaque itération s'effectue ensuite en incrémentant d'une unités l'indice n, par le calcul des coordonnées de

$$A_n : \begin{cases} Y_n = g\ (Z_{n-1},\ \beta) \\ Z_n = Z_{n-1} \end{cases}$$

puis de :

$$A_{n+1} : \begin{cases} Y_{n+1} = Y_n \\ Z_{n+1} = f\ (Y_n, \alpha\ ) \end{cases}$$

- puis l'on teste pour chaque calcul des coordonnées de $A_n$ et $A_{n+1}$ pour une valeur de n fixée, les différences en valeurs absolues :
$$|Y_n - Y_{n-1}| \text{ et } |Z_{n+1} - Z_n|$$
par rapport à des bornes inférieures $\Delta Y$ min et $\Delta Z$ min imposées, les coordonnées $Y_A$ et $Z_A$ de A retenues étant les dernières ayant été calculées.

11. Procédé selon la revendication 10, **caractérisé en ce que** le rapport entre la borne inférieure $\Delta Y$ min la concernant et la largeur moyenne à mesurer du prisme (2) est compris entre 0,5/1000 et 1/1000.

12. Procédé selon la revendication 10 ou 11, **caractérisé en ce que** le rapport entre la borne inférieure $\Delta Z$ min la concernant et l'épaisseur moyenne à mesurer du prisme (2) est compris entre 0,5/1000 et 1/1000.

13. Procédé selon l'une des revendications 1 à 6 et 10 à 12, **caractérisé en ce que** la vitesse du convoyeur (1) est nulle.

14. Procédé selon l'une des revendications 2 à 13, **caractérisé en ce que** l'opération de découpe transversale du prisme (2), consistant notamment en la chute de la lame du massicot (7), est asservie en continu au contrôle de la vitesse et/ou longueur dudit prisme.

**Patentansprüche**

1. Optoelektronisches Verfahren zur kontinuierlichen Überprüfung der Maßhaltigkeit eines Prismas mit parallelogrammförmigem Querschnitt (2) auf einer Fördereinrichtung (1), die mit einer bestimmten Geschwindigkeit entlang einer zur Achse des Prismas parallelen Achse (OX) läuft, wobei das Verfahren die folgenden Schritte aufweist:

a) Anvisieren von zwei nicht parallelen Oberflächen des Prismas in zu jeder von diesen senkrechten Richtungen (OY, OZ), und zu einem vorgegebenen Zeitpunkt Erstellen der zwei Winkelmessungen ($\alpha$, $\beta$) relativ zu den Positionen der drei Kanten, welche diese zwei Oberflächen begrenzen,

b) Schätzen der Position der diesen zwei Oberflächen gemeinsamen Kante in Bezug auf die eine oder die andere der Richtungen (OY, OZ),

c) Bestimmen der exakten Position der gemeinsamen Kante in den beiden Richtungen (OY, OZ) durch Iterationen ausgehend von den beiden Winkelmessungen ($\alpha$, $\beta$) und der Schätzung, welche vorausgehend durchgeführt wurden, wobei die Iterationen aufhören, wenn der Unterschied zwischen den zwei aufeinanderfolgenden Annäherungen an diese Position in jeder der Richtungen (OY, OZ) kleiner als die vorgegebene Genauigkeit ist.

2. Verfahren nach Anspruch 1, *dadurch gekennzeichnet, daß* nach dem Schneiden des Prismas (2) in Querrichtung die dritte Abmessung des derart zusammengesetzten Parallelepipeds (8) ausgehend von einer zusätzlichen Winkelmessung ($\gamma$) und der Bestimmung der exakten Position der gemeinsamen Kante bestimmt wird.

3. Verfahren nach einem der Ansprüche 1 oder 2, *dadurch gekennzeichnet, daß* die Winkelmessungen ($\alpha$, $\beta$ und gegebenenfalls $\gamma$) durch lineare CCD-Kameras (10, 11, und gegebenenfalls 12) bestimmt werden.

4. Verfahren nach einem der Ansprüche 2 oder 3, *dadurch gekennzeichnet, daß* das Parallelepiped (8) ein rechtwinkliges Parallelepiped ist.

5. Verfahren nach Anspruch 4, *dadurch gekennzeichnet, daß* zwei CCD-Kameras (10, 11) für die Messung der Dicke bzw. der Breite des Prismas (2) in den zusammenfallenden und senkrecht zur Achse (OX) der Fördereinrichtung (1) gelegenen Beobachtungsebenen angeordnet werden, und eine dritte CCD-Kamera (12) für die Messung der Länge des Parallelepipeds (8) und gegebenenfalls seiner Geschwindigkeit in der Beobachtungsebene parallel zur Achse (OX) der Fördereinrichtung (1) angeordnet wird.

6. Verfahren nach einem der Ansprüche 1 bis 5, *dadurch gekennzeichnet, daß* die Arbeitsschritte der Verarbeitung der Winkelmessungen ($\alpha$, $\beta$ und gegebenenfalls $\gamma$) von einer Recheneinheit (9) durchgeführt werden, mit denen jede der Kameras (10, 11 und gegebenenfalls 12) verbunden ist.

7. Verfahren nach einem der Ansprüche 1 bis 6, *dadurch gekennzeichnet, daß* die Gesamtheit der vorhergehenden Arbeitsschritte mit einer Frequenz von 100 Hz stattfindet.

8. Verfahren nach einem der Ansprüche 1 bis 7, *dadurch gekennzeichnet, daß* die erhaltenen Werte für jede der Abmessungen statistisch in Echtzeit zwischen zwei Winkelmeßreihen verarbeitet werden, wobei abweichende Werte eliminiert werden.

9. Verfahren nach den Ansprüchen 7 und 8, *dadurch gekennzeichnet, daß* die statistische Verarbeitung mit einer Frequenz von 1 Hz durchgeführt wird.

10. Verfahren nach einem der vorhergehenden Ansprüche, *dadurch gekennzeichnet, daß* bei Schritt c die Iterationen an den Koordinaten des Punktes A, welcher der den zwei Oberflächen des Prismas (2) gemeinsamen Kante angehört, ausgehend von einer angenäherten Koordinate $Y_0$ seiner Koordinaten und den Winkelmessungen ($\alpha$, $\beta$) der Dickenkamera (10) und der Breitenkamera (11), auf die folgende Weise vorgenommen werden:

- der Schritt der Initialisierung der Iterationen findet statt bei dem Punkt $A_n$ mit den Koordinaten

$$\begin{cases} Y_n \\ Z_n = f(Y_n, \alpha) \end{cases}$$

wobei n = 0
- jede Iteration findet anschließend statt durch Inkrementieren des Index n um eine Einheit, durch die Berechnung der Koordinaten von

$$A_n: \quad \begin{cases} Y_n = g(Z_{n-1}, \beta) \\ Z_n = Z_{n-1} \end{cases}$$

und dann von

$$A_{n+1}: \quad \begin{cases} Y_{n+1} = Y_n \\ Z_{n+1} = f(Y_n, \alpha) \end{cases}$$

- dann werden bei jeder Berechnung der Koordinaten von $A_n$ und $A_{n+1}$ für einen festen Wert von n die Unterschiede in Absolutwerten:
$$|Y_n - Y_{n-1}| \text{ und } |Z_{n+1} - Z_n|$$
in Bezug auf vorgegebene Untergrenzen $\Delta Y$ min und $\Delta Z$ min überprüft, wobei die beibehaltenen Koordinaten $Y_A$ und $Z_A$ von A die als letzte berechneten sind.

**11.** Verfahren nach Anspruch 10, *dadurch gekennzeichnet, daß* das Verhältnis zwischen der betreffenden Untergrenze $\Delta Y$ min und der zu messenden mittleren Breite des Prismas (2) zwischen 0,5/1000 und 1/1000 liegt.

**12.** Verfahren nach Anspruch 10 oder 11, *dadurch gekennzeichnet, daß* das Verhältnis zwischen der betreffenden Untergrenze $\Delta Z$ min und der zu messenden mittleren Dicke des Prismas (2) zwischen 0,5/1000 und 1/1000 liegt.

**13.** Verfahren nach einem der Ansprüche 1 bis 6 und 10 bis 12, *dadurch gekennzeichnet, daß* die Geschwindigkeit der Fördereinrichtung (1) Null ist.

**14.** Verfahren nach einem der Ansprüche 2 bis 13, *dadurch gekennzeichnet, daß* der Arbeitsschritt des Schneidens des Prismas (2) in Längsrichtung, der insbesondere im Niedergehen der Klinge des Schneidmessers (7) besteht, kontinuierlich an die Überprüfung der Geschwindigkeit und/oder Länge des Prismas gebunden ist.

## Claims

**1.** Optoelectronic method of continuously monitoring the dimensions of a prism having a cross-section in the form of a parallelogram (2) on a conveyor (1) passing at a certain speed (2) along an axis (OX) parallel to the axis of said prism and comprising the following stages:

a) a sight is taken on two non-parallel faces of said prism along directions (OY, OZ), perpendicular to each of them, and at a given moment the two angular measurements ($\alpha$, $\beta$) are obtained which relate to the positions of the three edges defining these two faces;

b) the position of the edge common to these two faces in relation to one or other of said directions (OY, OZ) is estimated;

c) the exact position of the common edge id determined along the two directions (OY, OZ) by iterations on a basis of the previous two angular measurements ($\alpha$, $\beta$) and the estimate, the iterations ceasing when the difference in two successive approximations (OY, OZ) is less than the required accuracy.

**2.** Method according to Claim 1, characterised in that after transverse cutting of the said prism (2), the third dimension of the parallelepiped thus constituted (8) is determined on a basis of an additional angular measurement ( ) and determination of the exact position of the common edge.

**3.** Method according to one of Claims 1 or 2, characterised in that the angular measurements ($\alpha$, $\beta$, and optionally ) are determined by linear CCD cameras (10, 11 and optionally 12).

**4.** Method according to one of Claims 2 or 3, characterised in that the parallelepiped (8) is a rectangular parallelepiped.

5. Method according to Claim 4, characterised in that two CCD cameras (10, 11) are disposed at coincident sighting planes perpendicular to the axis (OX) of the conveyor (1) for measuring respectively the thickness and the width of the prism (2) and a third CCD camera (12) is disposed at the sighting plane parallel to the axis (OX) of the conveyor (1) in order to measure the length, and optionally the speed, of the parallelepiped.

6. Method according to one of Claims 1 to 5, characterised in that the operations involved in processing the angular measurements ($\alpha$, $\beta$ and optionally ) are performed using a processing unit (9) to which each of the cameras (10, 11 and optionally 12) is connected.

7. Method according to one of Claims 1 to 6, characterised in that all the aforementioned operations are carried out at a frequency of 100 Hertz.

8. Method according to one of Claims 1 to 7, characterised in that the values obtained for each of the dimensions are statistically processed in real time between two sets of angular measurements, divergent values being eliminated.

9. Method according to Claims 7 and 8, characterised in that the statistical processing is performed at a frequency of 1 Hertz.

10. Method according to one of the preceding claims, characterised in that during stage c) the iterations are performed on the coordinates of the point A belonging to the edge common to the two faces of the prism (2), on a basis of one ($Y_0$) of its approximate coordinates and angular measurements ($\alpha$, $\beta$) of the thickness (10) and width (11) cameras in the following manner:
- the stage of initialising the iterations is performed with the point $A_n$ of the coordinates
$$Y_n$$
$$Z_n = f(Y_n, \alpha)$$
where n = 0
- each iteration is then performed, the index n being increased by increments of one unit, by calculation of the coordinates of
$$A_n: \qquad Y_n = g(Z_{n-1}, \beta)$$
$$Z_n = Z_{n-1}$$
then of:
$$A_{n+1}: \qquad Y_{n+1} = Y_n$$
$$Z_{n+1} = f(Y_n, \alpha)$$
- then for each calculation of coordinates of $A_n$ and An+1 for a fixed value of n, the differences are tested in absolute values:
$$Y_n - Y_{n-1} \text{ and } Z_{n+1} - Z_n$$
in relation to the bottom limits Ymin and Zmin imposed, the coordinates $Y_A$ and $Z_A$ of A which are retained being the last to have been calculated.

11. Method according to Claim 10, characterised in that the ratio between the lower limit Ymin concerning it and the mean width of the prism (2) to be measured is between 0.5/1000 and 1/1000.

12. Method according to Claim 10 or 11, characterised in that the ratio between the lower limit Zmin concerning it and the mean thickness of the prism (2) to be measured is comprised between 0.5/1000 and 1/1000.

13. Method according to one of Claims 1 to 6 and 10 to 12, characterised in that the speed of the conveyor (1) is nil.

14. Method according to one of Claims 2 to 13, characterised in that the operation of transverse cutting of the prism (2) consisting in particular of the drop of the blade of the shredder (7), is continuously subjected to monitoring of the speed and/or length of said prism.

FIG_1

FIG. 2

U.C.

EP 0 511 047 B1

FIG_3

FIG_4

14

$Y = Y_0$

51

$\alpha$
$\beta$

52

$\underline{A_n}$
$Y_n$
$Z_n = f(Y_n, \alpha)$
$n = 0$

53

$n = n+1$

$\underline{A_n}$
$Y_n = g(Z_{n-1}, \beta)$
$Z_n = Z_{n-1}$

54

$\underline{A_{n+1}}$
$Y_{n+1} = Y_n$
$Z_{n+1} = f(Y_n, \alpha)$

55

Test
$|Y_n - Y_{n-1}| \leqslant \Delta Y_{min}$

56

Test
$|Z_{n+1} - Z_n| \leqslant \Delta Z_{min}$

57

$\underline{A}$
$Y_A = Y_{n+1}$
$Z_A = Z_{n+1}$

58

## FIG_5